(19) **Europäisches Patentamt**

**European Patent Office**

**Office européen des brevets**

(11) **EP 1 130 310 B1**

(12) **EUROPÄISCHE PATENTSCHRIFT**

(45) Veröffentlichungstag und Bekanntmachung des Hinweises auf die Patenterteilung:
**03.08.2005 Patentblatt 2005/31**

(51) Int Cl.⁷: **F21S 8/00**, F21V 13/12, F21V 5/02, F21V 11/14, F21V 8/00, G02B 6/00, F21W 131/402 // F21W131:402

(21) Anmeldenummer: **01105265.1**

(22) Anmeldetag: **05.03.2001**

(54) **Hohllichtleiterleuchte mit in den Hohlraum integrierter Lampe**

Hollow light conductor luminaire comprising a lamp in the cavity

Luminaire à conducteur de lumière creux avec une lampe intégrée dans la cavité

(84) Benannte Vertragsstaaten:
**AT BE CH CY DE DK ES FI FR GB GR IE IT LI LU MC NL PT SE TR**
Benannte Erstreckungsstaaten:
**SI**

(30) Priorität: **03.03.2000 DE 10010471**

(43) Veröffentlichungstag der Anmeldung:
**05.09.2001 Patentblatt 2001/36**

(73) Patentinhaber: **Siteco Beleuchtungstechnik GmbH**
**83301 Traunreut (DE)**

(72) Erfinder:
• **Prodell, Peter**
**83308 Trostberg (DE)**
• **Belloni, Paola**
**83278 Traunstein (DE)**

(74) Vertreter: **Schohe, Stefan et al**
**Forrester & Boehmert**
**Pettenkoferstrasse 20-22**
**80336 München (DE)**

(56) Entgegenhaltungen:
**EP-A- 0 236 030          EP-A- 0 293 182**
**DE-A- 3 420 414**

EP 1 130 310 B1

**Beschreibung**

Die Erfindung betrifft eine Leuchte zur blendungsfreien Ausleuchtung von Innenräumen, insbesondere von Arbeitsplätzen in Innenräumen.

Bei Beleuchtungsanlagen für Innenräume, z.B. für die Arbeitsplatzbeleuchtung, besteht ein Bedarf an Leuchten mit Abschirmung, d.h. Leuchten, deren Lichtverteilung so gestaltet ist, daß die mittlere Leuchtdichte an der Lichtausttrittsfläche der Leuchte für bestimmte Blickrichtungen unter einen Grenzwert reduziert wird. Nach der derzeit geltenden deutschen Norm liegt dieser Grenzwert bei 200 cd/m$^2$. Eine geplante europäische Norm sieht unterschiedliche Grade der Abschirmung vor, die durch Leuchtdichtewerte von 200 cd/m$^2$, 500 cd/m$^2$ und 1000 cd/m$^2$ definiert sind.

Bei Leuchtensystemen mit großflächigen oder langgestreckten Lichtaustrittsflächen, z.B. bei Leuchtensystemen mit stabförmigen Leuchtstofflampen, wird eine Abschirmung in den Ebenen parallel zur Lampenerstreckung durch Lamellen oder Raster bzw. in Ebenen quer zur Lampenerstreckung durch eine geeignete Formgebung und/oder Anordnung von Gehäuse oder Reflektor erreicht. Je nach Größe des Abschirmwinkels und Baugröße (Länge) der Leuchte benötigen die Lamellen und das Gehäuse bzw. der Reflektor eine minimale Bauhöhe, so daß die Gesamtbauhöhe der Leuchte vergrößert wird

Die Patentschrift DE 34 20 414 C2 offenbart eine lichtdurchlässige Leuchtenabdeckung zur Entblendung von Leuchten mit langgestreckten Lampen. Anstelle von quer zur Erstreckung der Lampe liegenden Lamellen sieht diese Patentschrift vor, die Lamellen durch eine Platte mit quer zur Lampenlängsachse verlaufenden Prismen zu ersetzen, wobei der Prismenquerschnitt die Form eines gleichschenkligen Dreiecks besitzt. Die Abmessungen dieser Prismen sind so gestaltet, daß von der Leuchtenabdeckung in Ebenen parallel zur Längserstreckung der Leuchte Licht oberhalb eines Abschirmwinkels bezüglich einer Normalen zu der Lichtaustrittsfläche abgeschirmt wird. Diese Leuchtenabdeckung hat somit den gleichen Effekt wie die Verwendung von Lamellen als Abschirmelemente. Der gewünschte Abschirmwinkel in Ebenen senkrecht zur Lampenachse wird wie zuvor durch die die Lampenanordnung umgebenden Reflektoren bzw. das Leuchtengehäuse erreicht. Insbesondere bei großflächigen Leuchtensystemen mit mehreren Lichtquellen, z.B. parallel angeordneten Leuchtstoffröhren, ist ein definierter Abschirmwinkel nur mit aufwendigen, geeigneten Konstruktionen von Reflektor und/oder Gehäuse erreichbar. In der Regel ist eine relativ große Bauhöhe des Leuchtengehäuses erforderlich, um die geforderte Abschirmung quer zur Lampenachse zu erreichen.

Ein weiterer Nachteil dieser Konstruktion besteht darin, daß das direkt von der Lampe auf die Prismenplatte einfallende Licht zu hellen Flecken auf der Lichtaustrittsfläche führt. Die Lichtaustrittsfläche weist daher keine gleichmäßige Leuchtdichte auf, was bei vielen Anwendungen erwünscht oder gefordert ist.

EP 0 293 182 A2 betrifft eine Beleuchtungsanordnung mit gerichteter Lichtabstrahlung für den Gebrauch bei Projektionsvorrichtungen, z.B. bei Overhead-Projektoren. Lichtquellen mit ungerichteter Abstrahlung sind dabei in einem Hohllichtleiter angeordnet, welcher ein Auskoppelfenster aufweist. Die vorangehend erwähnten hellen Flecken werden gemäß dieser Druckschrift dadurch vermieden, daß in dem Lichtauskoppelfenster eine Prismenstruktur vorgesehen ist, welche das Licht mit einem senkrechten oder nahezu senkrechten Lichteinfall zurück in den Hohllichtleiter reflektiert und nur Licht auskoppelt, welches mit einem Winkel oberhalb eines Grenzwinkels zur Senkrechten auf dieses Fenster einfällt. Die dort verwendeten Prismenstrukturen ermöglichen keine Abschirmung, sondern führen vielmehr für große Winkel zu einer nicht verschwindenden Lichtauskopplung.

EP 0 236 030 A2 offenbart ein Lichtpanel, das einen ersten Lichtleiter aufweist, der innerhalb eines zweiten Lichtleiters angeordnet ist. In den ersten Lichtleiter wird Licht von einer außerhalb des ersten und zweiten Lichtleiters angeordneten Leuchteneinheit eingekoppelt und durch einen Umlenkreflektor so umgelenkt, daß es sich in dem ersten Lichtleiter parallel zu dessen Längsachse ausbreitet. An vorbestimmten Stellen wird Licht aus dem ersten Lichtleiter durch reflektierende Elemente ausgekoppelt, so daß es in den zweiten Lichtleiter eintritt. Aus durch reflektierende Elemente ausgekoppelt, so daß es in den zweiten Lichtleiter eintritt. Aus dem zweiten Lichtleiter wird das Licht dann durch zweite reflektierende Elemente an dessen Oberfläche ausgekoppelt.

Es ist die Aufgabe der Erfindung, eine einfach aufgebaute Leuchte zur Verfügung zu stellen, welche den geltenden Normen bzw. Normvorschlägen betreffend die Abschirmung genügt und eine möglichst gleichmäßige Leuchtdichte über der Lichtaustrittsfläche bewirkt.

Erfindungsgemäß wird diese Aufgabe durch eine Leuchte zur blendungsfreien Beleuchtung von Innenräumen, insbesondere von Arbeitsplätzen in Innenräumen, mit einer oder mehreren Lampen und einem Hohllichtleiter, der einen Hohlraum mit einer oder mehreren zumindest teilweise reflektierenden Wänden aufweist und aus dem Licht an mindestens einer Lichtauskoppelfläche über eine Lichtauskoppeleinrichtung zum Austritt über eine Lichtaustrittsfläche der Leuchte ausgekoppelt wird, die mit der Lichtauskoppelfläche identisch sein kann, wobei die Lichtauskoppeleinrichtung ein oder mehrere lichtdurchlässige Elemente mit einer lichtbrechenden Struktur aufweist, welche in zumindest einer Ebene senkrecht zu der Lichtaustrittsfläche eine Lichtabstrahlung oberhalb eines Grenzwinkels im wesentlichen verhindert, derart, daß dadurch eine Abschirmung des an der Lichtaustrittsfläche austretenden Lichts in dieser Ebene herbeigeführt wird, und wobei in dem Hohlraum mindestens eine Lampe angeordnet ist, die Licht in den Hohlraum des Hohllichtleiters direkt abgibt, wobei die Lampe in dem Hohlraum so angeordnet ist, daß die Lichtstärkeverteilung des von ihr unmittelbar abgestrahlten Lichts in einer Richtung zu der Lichtauskoppeleinrichtung, insbesondere im wesentlichen senkrecht zu der Lichtauskoppeleinrichtung, zumindest ein relatives Minimum aufweist, und/ oder eine Lichtstärkebegrenzungseinrichtung vorhanden ist, welche zumindest für einen Teil des von der Lampe in einer Richtung zu der Lichtauskoppeleinrichtung, insbesondere im wesentlichen senkrecht zu der Lichteinfallsfläche der Lichtauskoppeleinrichtung, abgestrahlten Lichts verhindert, daß dieses Licht direkt auf die Lichtauskoppeleinrichtung einfällt und dann in das bzw. die lichtdurchlässigen Elemente mit der lichtbrechenden Struktur eintritt. Die Lichtstärkebegrenzungseinrichtung kann insbesondere einen Teil des von der Lampe in eine bestimmte Richtung abgestrahlten Lichts absorbieren oder zurückreflektieren und einen weiteren Teil durchlassen oder vollständig absorbierend oder reflektierend wirken. Erfindungsgemäß kann das direkt von der Lampe einfallende Licht durch eines oder mehrere der Elemente hindurchtreten. Zumindest für eines der Elemente wird jedoch der Eintritt des Lichts in dieses Element behindert oder verhindert.

Wie bereits einleitend erwähnt wurde, bedeutet eine Abschirmung der Leuchte, daß in einer Ebene senkrecht zu der Lichtaustrittsfläche die mittlere Leuchtdichte oberhalb eines Grenzwinkels (Abschirmwinkel) zu einer Senkrechten zu der Lichtaustrittsfläche in dieser Ebene unterhalb eines vorbestimmten Grenzwerts liegt. Bei der erfindungsgemäßen Leuchte kann der Abschirmwinkel in einem Bereich von 45° bis 75°, bevorzugt von 50° bis 65° und besonders bevorzugt von 55° bis 65° liegen. Der besagte Grenzwert der Leuchtdichte kann z. B. entsprechend den eingangs erwähnten, derzeit geltenden Normen bzw. Normvorschlägen zur Beleuchtung von Bildschirmarbeitsplätzen bei 200 cd/m$^2$ 500 cd/ m$^2$ oder 1000 cd/ m$^2$ liegen.

Die Abschirmung kann auch in einem raumbezogenen Ebenensystem vorgesehen sein, z. B. dem C-Ebenensystem gemäß DIN 5032-1.

Anders als nach dem Stand der Technik wird das Auftreten der hellen Flecken nicht dadurch vermieden, daß die lichtbrechende Struktur, welche das Licht auskoppelt, selektiv für bestimmte Einfallsrichtungen ist, sondern dadurch, daß die Stärke des von der Lampe direkt auf die Elemente der Lichtauskoppeleinrichtung einfallenden bzw. in diese eintretenden Lichts in den kritischen Bereichen begrenzt wird. Dies läßt sich durch einfache technische Maßnahmen erreichen und führt daher zu einer kostengünstigen Leuchte. Die Erfindung sieht hierfür mehrere Realisierungsmöglichkeiten vor, die einzeln oder in Kombination verwendet werden können. Erfindungsgemäß kann eine Lampe mit einer geeigneten Lichtabstrahlcharakteristik eingesetzt werden. Eine transparente oder lichtundurchlässige Abdeckung für das direkt von der Lampe kommende Licht kann aber auch zwischen der Lampe und der Lichtauskoppelfläche oder an Elementen der Lichtauskoppeleinrichtung vorgesehen sein.

Im einfachsten Fall ist eine Lampe in dem Hohlraum so angeordnet, daß sie z.B. in der Richtung im wesentlichen senkrecht zu der Lichtauskoppelfläche bzw. den Elementen der Lichtauskoppeleinrichtung weniger Licht abstrahlt als in Richtungen schräg oder parallel zu der Lichtauskoppelfläche.

Beispielsweise kann die Lampe eine Leuchtstofflampe sein, welche so angeordnet ist, daß ihre Stirnseite der Lichtauskoppelfläche zugewandt ist. Über diese Stirnseite wird wenig oder gar kein Licht abgegeben. Vielmehr wird der Hauptanteil des Lichts in einer Richtung im wesentlichen parallel zu der Lichtaustrittsfläche in den Hohlraum eingestrahlt. Auf diese Weise werden die sogenannten vorangehend erwähnten hellen Flecken vermieden. Ein weiteres einfaches Beispiel wäre eine Glühlampe, welche mit ihrem Fassungsende zu der Lichtauskoppelfläche weist. Wenn die Lampe solchermaßen angeordnet ist, kann im einfachsten Fall ohne zusätzliche Maßnahmen bereits eine weitgehend gleichmäßige Ausleuchtung der Lichtaustrittsfläche der Leuchte erreicht werden.

Eine Anordnung einer Lampe derart, daß ihre Lichtstärkeverteilungskurve den vorangehend genannten Anforderungen entspricht, ist jedoch nicht bei allen lichttechnischen Anwendungen möglich.

Die Erfindung kann daher vorsehen, daß eine oder mehrere in dem Hohlraum befindliche Lampen mit weiteren lichttechnischen Elementen, wie Blenden, Reflektoren oder dgl., zu einer Lampeneinheit zusammengefaßt sind, wobei die Lampeneinheit insgesamt so eingerichtet ist, daß die Lichtstärkeverteilung des von ihr abgegebenen Lichts in einer Richtung zu der Lichtauskoppelfläche und/oder den Elementen der Lichtauskoppeleinrichtung, insbesondere in einer Richtung senkrecht zu der Lichtauskoppelfläche bzw. den Elementen, zumindest ein relatives Minimum aufweist.

Die Erfindung kann insbesondere vorsehen, daß eine Lichtstärkebegrenzungseinrichtung zwischen der Lampe und der Lichtauskoppeleinrichtung angeordnet ist und einen direkten Lichteinfall von der Lampe auf die Lichtauskoppeleinrichtung behindert oder verhindert.

Die Lichtstärkebegrenzungseinrichtung kann beispielsweise ein oder mehrere Reflektoren oder andere reflektierende Elemente aufweisen, welche nach Art eines Sekundärreflektors das direkt von der Lampe auf sie einfallende Licht von der Lichtauskoppeleinrichtung weg zu den Wänden des Hohlraums reflektieren. Diese reflektierenden Elemente können auch teilweise lichtdurchlässig sein, so daß ein Teil des Lichts durch diese Elemente hindurch tritt und auf die Lichtauskoppeleinrichtung einfällt. Generell ist es auch möglich, zwischen der Lampe und der Lichtauskoppeleinrichtung ein ganz oder teilweise lichtundurchlässiges Element anzuordnen, das nicht notwendigerweise reflektierend ausgebildet sein muß. Die Lichtstärkebegrenzungseinrichtung kann auch ein diffus streuendes lichtdurchlässiges Element aufweisen, welches das in Richtung zu der Lichtauskoppelfläche abgestrahlte Licht in verschiedene Richtungen streut und dadurch die Lichtstärke in der ursprünglichen Richtung schwächt. Die vorangehend genannten Möglichkeiten der Ausgestaltung der Lichtstärkebegrenzungseinrichtung können natürlich auch kombiniert werden.

Die Lichtstärkebegrenzungseinrichtung kann auch als Folie oder Schablone mit lichtdurchlässigen und/oder ganz oder teilweise lichtundurchlässigen Abschnitten ausgebildet sein, die z.B. auf die Lichtauskoppeleinrichtung aufgelegt oder zwischen der Lampe und der Lichtauskoppeleinrichtung durch geeignete Haltemittel zu der Lichtauskoppeleinrichtung beabstandet gehalten wird.

Reflektoren einer Lichtstärkebegrenzungseinrichtung können in vorteilhafter Weise auch dafür verwendet werden, um die Lichtstärkeverteilung des auf die Lichtauskoppeleinrichtung einfallenden Lichts insgesamt und die Lichtstärkeverteilung des aus der Leuchte austretenden Lichts zu beeinflussen. Beispielsweise kann durch eine geeignete Wahl von Reflektoren oder Reflektorkombinationen, welche das auf sie einfallende Licht zu der Lampe zurückreflektieren oder umlenken, eine asymmetrische Lichtabstrahlung der Leuchte erreicht werden.

Die Erfindung kann auch vorsehen, daß die Oberfläche eines transparenten Elements der Lichtauskoppeleinrichtung an der Lichteinfallsseite zumindest in einem Abschnitt, der vorzugsweise einem Bereich entspricht, in dem die Verbindungslinie von der Lichteinfallsfläche des Elements zu dem Zentrum der Lampe im wesentlichen senkrecht zu der Lichteinfallsfläche steht, so ausgebildet ist, daß, über alle Einfallswinkel gemittelt, nur ein Teil des darauf einfallenden Lichts in das Element eintritt, der kleiner ist als der entsprechende Anteil in einem angrenzenden Abschnitt. An einer glatten Grenzfläche zwischen zwei Medien mit unterschiedlichem Brechungsindex wird bei einem Lichteinfall von der Seite des optisch dünneren Mediums bzw. unterhalb des Grenzwinkels der Totalreflexion beim Lichteinfall von der Seite des optisch dichteren Mediums immer ein gewisser Teil des einfallenden Lichts reflektiert (Fresnell-Reflexion). Erfindungsgemäß ist ein entsprechender Abschnitt der Oberfläche eines der erwähnten transparenten Elemente so beschichtet, strukturiert oder anderweitig behandelt, daß der Anteil des reflektierten Lichts größer ist als der Anteil, der an einer glatten Grenzfläche aufgrund von Fresnel-Reflexion reflektiert wird.

Erfindungsgemäß kann zumindest ein Teil des erwähnten Abschnitts mit einer ganz oder teilweise absorbierenden und/oder reflektierenden Beschichtung versehen sein.

Beispielsweise kann vorgesehen sein, daß der Abschnitt mit einer teilweise reflektierenden und teilweise lichtdurchlässigen Beschichtung versehen ist. Die Beschichtung kann auch vollständig reflektierend sein, wobei es hierbei zweckmäßig sein kann, auf der Lichteintrittsfläche des Elements lichtdurchlässige Bereiche vorzusehen, die sich mit lichtundurchlässigen Bereichen abwechseln, beispielsweise in Form einer Struktur oder eines Musters von reflektierenden Streifen. Ein derartiges Muster kann natürlich auch im Falle einer nur teilweise reflektierenden und teilweise lichtdurchlässigen Beschichtung vorgesehen sein. Wenn die Lichtauskoppeleinrichtung aus mehreren übereinander geschichteten Platten mit einer lichtbrechenden Struktur besteht, kann eine entsprechende Ausbildung der Oberfläche, z.B. eine Beschichtung, an der an den Hohlraum angrenzenden Platte, alternativ oder ergänzend aber auch an anderen Platten der Lichtauskoppeleinrichtung vorgesehen sein.

Weiterhin kann vorgesehen sein, daß die Lichtstärkebegrenzungseinrichtung ein oder mehrere Elemente aufweist, die von der Lampe in Richtung zu der Lichtauskoppeleinrichtung abgestrahltes Licht zumindest teilweise in eine Richtung weg von der Lichtaustrittsfläche, vorzugsweise in den Hohlraum des Hohllichtleiters reflektieren.

Es kann auch vorgesehen sein, daß die Lichtstärkebegrenzungseinrichtung teilweise direkt von der Lampe auf sie einfallendes Licht durchläßt.

Gemäß einer Ausführungsform kann die Lichtstärkebegrenzungseinrichtung eine Lochstruktur mit Löchern zum Durchlassen von Licht der Lampe aufweisen.

Beispielsweise kann eine reflektierende Beschichtung auf einem der Element der Lichtauskoppeleinrichtung mit Unterbrechungen versehen sein, durch die Licht ungehindert hindurchtreten kann. Die Lichtstärkebegrenzungseinrichtung kann beispielsweise auch ein Lochblech aufweisen, das zwischen der Lampe und der Lichtauskoppeleinrichtung vorgesehen ist.

Die Erfindung kann auch vorsehen, daß die Lichtstärkebegrenzungseinrichtung ein oder mehrere Elemente aufweist, die auf der der Lichtauskoppeleinrichtung zugewandten Seite zumindest teilweise reflektierend ausgebildet sind.

Die Lichtstärkebegrenzungseinrichtung kann z.B. ein oder mehrere Reflektoren aufweisen, die auf ihrer Unterseite reflektierend, beispielsweise verspiegelt, ausgebildet sind. Ebenso kann beispielsweise auch ein diffus streuendes oder ein absorbierendes Element, ein Lochblech oder ein anderes die Lichtstärke begrenzendes Element auf der der Lichtauskoppeleinrichtung zugewandten Seite reflektierend, insbesondere auch spiegelnd ausgebildet sein. Durch diese Maßnahme wird der Anteil des zu der Lichtauskoppeleinrichtung gelenkten Lichts in dem Hohlraum vergrößert und verhindert, daß Licht zu der Lampe zurückreflektiert wird.

Die Erfindung kann vorsehen, daß die Lichtstärkebegrenzungsreinrichtung ein oder mehrere Elemente, also z.B. Reflektoren, Diffusoren oder beschichtete oder strukturierte Abschnitte der Oberfläche eines Elements der Lichtauskoppeleinrichtung, enthält, die auf der der Lampe zugewandten Seite und/oder auf der von der Lampe abgewandten Seite diffus reflektierend ausgebildet sind.

Eine diffus reflektierende Ausbildung der reflektierenden Flächen der Abschirmeinrichtung fördert eine gleichmäßige Lichtabgabe an einer Lichtaustrittsfläche der Leuchte.

Erfindungsgemäß kann auch vorgesehen sein, daß die Lichtstärkebegrenzungseinrichtung zumindest ein Element aufweist, bei dem der Grad der Lichtdurchlässigkeit sich über einer Fläche verändert, auf die Licht von der Lampe direkt oder indirekt, z.B. über ein weiteres Element der Lichtstärkebegrenzungseinrichtung, einfällt.

Der direkte Lichteinfall von der Lampe auf die Elemente der Lichtauskoppeleinrichtung bzw. der direkte Durchtritt durch diese Elemente kann damit für diejenigen Richtungen gezielt reduziert werden, bei denen ohne weitere Maßnahmen die Lichtstärke besonders hoch wäre, während für andere Richtungen, bei denen der Anteil des direkt einfallenden Lichtes weniger stark wäre, die Lichtstärke auch weniger stark reduziert wird.

Wenn beispielsweise die Lichtstärkebegrenzungseinrichtung aus einem Element mit einer Lochstruktur besteht, kann der Grad der Lichtdurchlässigkeit durch eine Änderung der Dichte der Löcher und/oder eine Änderung des Durchmessers der Löcher verändert werden. Ergänzend oder alternativ ist es auch möglich, ein solches Element ganz oder teilweise aus einem transparentem Material auszubilden, wobei der Transmissionsgrad über der Fläche dieses Sekundärelementes variiert, was sich beispielsweise dadurch erreichen läßt, daß die Dicke des Elements variiert.

Wenn die Lichtstärkebegrenzungseinrichtung ein Muster von lichtdurchlässigen und lichtundurchlässigen Bereichen auf Elementen der Lichtauskoppeleinrichtung aufweist, beispielsweise in Form eines Streifenmusters, kann der Transmissionsgrad dadurch variiert werden, daß sich der Anteil der lichtdurchlässigen Bereiche gegenüber dem Anteil der lichtundurchlässigen Bereiche ändert. Ein unterschiedlicher Transmissionsgrad läßt sich auch durch eine geeignete Beschichtung erreichen. Beispielsweise kann der Transmissionsgrad durch eine geeignete Wahl der Schichtdicke beeinflußt werden. Auf diese Weise lassen sich Muster mit einem unterschiedlichen Transmissionsgrad auf dem Element bilden.

In der Regel wird man den Grad der Lichtdurchlässigkeit in der Richtung im wesentlichen senkrecht zu der Lichtauskoppelfläche am kleinsten wählen und für Richtungen, die einen größeren Winkel zu der Senkrechten zu der Lichtauskoppelfläche bilden, den Grad der Lichtdurchlässigkeit größer wählen.

Die Erfindung kann mehrere Lichtstärkebegrenzungseinrichtungen aufweisen. Beispielsweise kann ein transparenter oder ausschließlich reflektierender Reflektor zusammen mit einer Platte der Lichtauskoppeleinrichtung verwendet werden, welche in einem kritischen Abschnitt mit einer lichtundurchlässigen oder teilweise lichtdurchlässigen Beschichtung versehen ist, wie vorangehend beschrieben.

Gemäß einem weiteren Aspekt der Erfindung wird eine Leuchte gemäß dem Oberbegriff des Anspruchs 1 zur Verfügung gestellt, welche dadurch gekennzeichnet ist, daß die Lichtauskoppeleinrichtung in dem Lichtweg des aus der Lichtaustrittsfläche austretenden Lichts eine erste und eine zweite Grenzfläche zwischen jeweils zwei Medien mit unterschiedlichen Brechungsindizes aufweist, die mit einer lichtbrechenden ersten bzw. zweiten Struktur versehen sind, die zumindest abschnittsweise entsprechend einem Linenmuster aus einer oder mehreren Linien ausgebildet ist, dessen Linie oder Linien einen oder mehrere längliche lichtbrechende Abschnitte auf einander gegenüberliegenden Seiten begrenzen, wobei die lichtbrechende Struktur, bezogen auf eine Fläche senkrecht zu der oder den Linien, eine Abschirmung des aus der Grenzfläche austretenden Lichts oberhalb eines Grenzwinkels bezüglich einer Normalen zu der Grenzfläche erzeugt, wobei die Linien der zweiten Struktur relativ zu den Linien der ersten Struktur so angeordnet sind, daß das aus der Lichtaustrittsfläche der Leuchte austretende Licht zumindest in zwei nicht parallelen Ebenen, vorzugsweise zwei zueinander senkrechten Ebenen, senkrecht zu der Lichtaustrittsfläche jeweils oberhalb eines Grenzwinkels bezüglich einer Normalen zu der Lichtaustrittsfläche abgeschirmt wird. Diese Leuchte kann insbesondere wie vorangehend beschrieben ausgebildet sein.

Es kann vorgesehen sein, daß die lichtbrechenden Abschnitte Prismen sind. Statt Prismen können auch prismenähnliche Strukturen, z.B. Strukturen mit abgeflachter oder abgerundeter Spitze statt einer Prismenkante und/oder gekrümmten Seitenwänden, oder linsenartige Strukturen vorgesehen sein.

Die Erfindung kann auch vorsehen, daß die erste und/oder zweite Struktur entsprechend einem Muster von geraden parallelen kreuzungsfreien Linien aufgebaut ist, zwischen denen sich Prismen als lichtbrechende Abschnitte befinden, deren Querschnittsprofil im wesentlichen translationsinvariant bezüglich der Richtung der Linien ist.

Insbesondere kann vorgesehen sein, daß die Lichtauskoppeleinrichtung zwei oder mehr geschichtete plattenförmige Elemente aufweist, deren Grundflächen parallel zueinander angeordnet sind, wobei die erste Struktur in einer Grundfläche eines ersten plattenförmigen Elementes und die zweite Struktur in einer Grundfläche eines zweiten plattenförmigen Elementes ausgebildet ist.

Gemäß einer Ausführungsform können die Prismen asymmetrisch ausgebildet sein.

Es kann vorgesehen sein, daß der Prismenwinkel im Bereich zwischen 90° und 130° liegt.

Bei einer erfindungsgemäßen Leuchte kann vorgesehen sein, daß mindestens eine Seitenwand und/oder eine Dachwand des Hohlraumes des Hohllichtleiters ganz oder teilweise diffus reflektierend, spiegelnd reflektierend oder matt ausgeführt ist.

Die Erfindung kann auch vorsehen, daß die Lichtauskoppeleinrichtung ein Diffusorelement aufweist, welches beispielsweise eine diffus streuende Platte oder Folie sein kann, welche den Platten mit den erwähnten lichtbrechenden Strukturen vorgeschaltet ist.

Die erfindungsgemäße Leuchte muß nicht notwendigerweise eine einzige Lichtaustrittsfläche aufweisen. Beispielsweise kann sie zur Abgabe eines indirekt strahlenden Anteils eingerichtet sein. In diesem Fall kann die Dachwand des Hohllichtleiters lichtdurchlässig ausgebildet sein. Beispielsweise kann die Dachwand in diesem Fall ganz oder teilweise als Lochblech ausgebildet sein oder ganz oder teilweise aus einem transparenten Material bestehen.

Durch die Verwendung von lichtbrechenden Strukturen zur Abschirmung können die Abmessungen des Leuchtengehäuses gegenüber denen bei Verwendung eines Rasters klein gehalten werden.

Die erfindungsgemäße Leuchte kann als Einbau-, Anbau- oder Pendelleuchte verwendet werden, ist jedoch nicht auf einen bestimmten Leuchtentyp beschränkt.

Weitere Merkmale und Vorteile der Erfindung ergeben sich aus der nachfolgenden Beschreibung von Ausführungsbeispielen der Erfindung anhand der beigefügten schematischen Zeichnungen.

Fig. 1 zeigt eine Querschnittsdarstellung einer erfindungsgemäßen Leuchte,

Fig. 2 zeigt eine perspektivische Ansicht der Abdeckung und der beiden rillenförmig strukturierten Prismenplatten,

Fig. 3 ist eine Schnittansicht der Prismenplatten gemäß Fig. 2 entlang der Linie IV-IV,

Fig. 4 ist eine Schnittansicht der beiden Prismenplatten gemäß Fig. 2 entlang der Linie V-V.

Fig. 5 zeigt eine Querschnittsdarstellung einer weiteren Ausführungsform einer erfindungsgemäßen Leuchte mit zwei Lampen,

Fig. 6 zeigt eine weitere Ausführungsform einer erfindungsgemäßen Leuchte mit zwei Lampen,

Fig. 7 zeigt eine Querschnittsdarstellung einer weiteren Ausführungsform einer erfindungsgemäßen Leuchte mit drei Lampen,

Fig. 8 zeigt eine Querschnittsdarstellung einer weiteren Ausführungsform mit zwei Lampen, wobei zwischen Abdeckung und Lampen Schirmelemente angeordnet sind,

Fig. 9 zeigt eine Querschnittsdarstellung einer weiteren Ausführungsform einer erfindungsgemäßen Leuchte mit einer Lampe, wobei zwischen der Abdeckung und der Lampe ein Schirmelement angeordnet ist.

Fig. 10 zeigt eine weitere Ausführungsform der Erfindung.

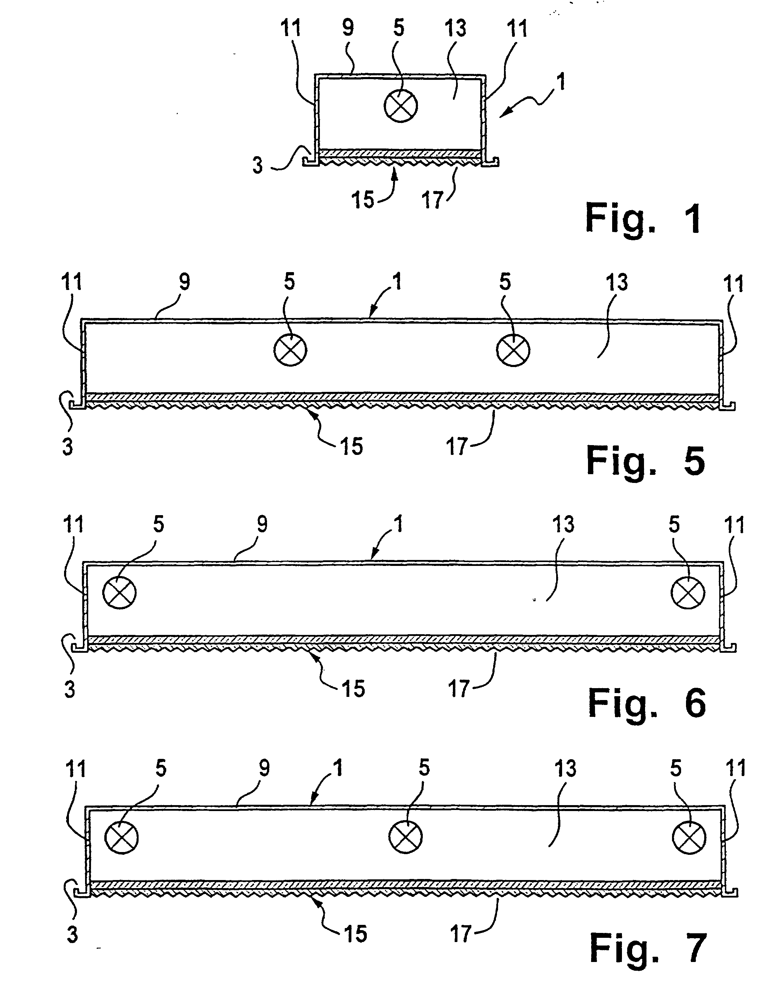

In Fig. 1 ist als ein Ausführungsbeispiel eine Einbauleuchte mit einem Gehäuse 1 dargestellt, das einen Rand 3 zum Anliegen oder Aufliegen an einer Deckenkonstruktion aufweist. Das Gehäuse 1 ist als Hohllichtleiter mit einem Hohlraum 13 ausgebildet, der eine reflektierende Dachwand 9 und reflektierende Seitenwände 11 aufweist. In dem Hohlraum 13 ist eine Lampe 5 angeordnet. Das Gehäuse 1 weist eine nach unten gerichtete Öffnung auf, in der eine Abdeckung 15 aus ganz oder teilweise transparentem Material angeordnet ist, welche eine Lichtauskoppeleinrichtung für Licht aus dem Hohlraum 13 bildet. Diese Abdeckung 15 befindet sich gegenüber der Lampe 5. Ihre Außenseite bildet die Lichtaustrittsfläche 17, die bei diesem Ausführungsbeispiel mit der Lichtauskoppelfläche des Hohllichtleiters zusammenfällt.

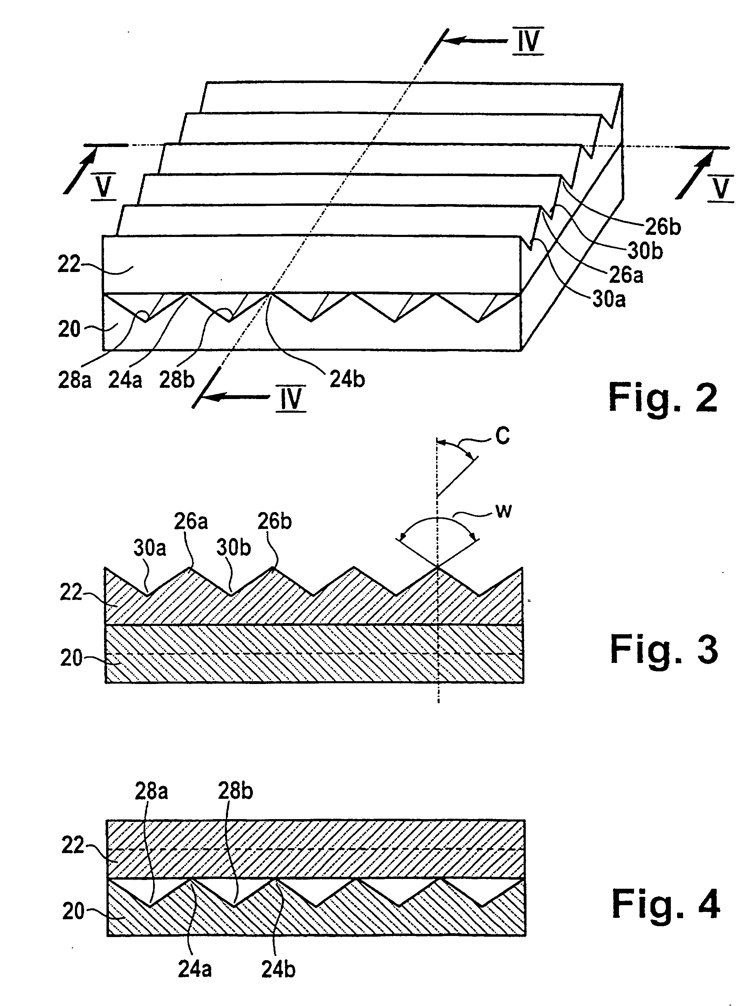

Die Abdeckung ist in den Fig. 2 bis 4 perspektivisch bzw. im Schnitt näher dargestellt. Sie besteht aus zwei Platten 20 und 22, die jeweils an der dem Lichteinfall gegenüberliegenden Seite eine Prismenstruktur mit satteldachförmigen Prismen 24a, 24b ... bzw. 26a, 26b, ... (nachfolgend kollektiv mit 24 bzw. 26 bezeichnet) versehen sind, die durch gerade rinnenförmige Vertiefungen 28a, 28b ... bzw. 30a, 30b, ... (nachfolgend kollektiv mit 28 bzw. 30 bezeichnet) voneinander getrennt sind. Dabei stehen die Kantenlinien der Prismen 24 bzw. die Vertiefungen 28 senkrecht zu den Kantenlinien der Prismen 26 bzw. den Vertiefungen 30. Der besseren Anschaulichkeit halber sind die Prismenplatten in Fig. 2 bis 4 so dargestellt, daß die Prismen, die im Einsatz nach außen, also zur Lichtaustrittsseite hin liegen, nach oben gerichtet dargestellt sind. Die Breite der Prismen beträgt gemäß den derzeit bevorzugten Ausführungsformen ca. 0,01 mm bis 40 mm, bevorzugt 0,05 mm bis 10 mm und besonders bevorzugt 0,1 mm bis 5 mm. Die Platten 20 und 22 bestehen aus einem leicht bearbeitbaren lichtdurchlässigem Material, z.B. Acrylglas, Polyester, Polystyrol oder Polycarbonat.

Die Prismenstrukturen der Platten 20 bzw. 22 legen jeweils den Abschirmwinkel der Leuchte in der Ebene senkrecht zu den Kantenlinien der Prismen 24 bzw. 26 bzw. den Vertiefungen dazwischen fest. Die Abschirmung kann z.B. durch Totalreflexion in den Prismen erzeugt werden. Licht in den Prismen wird beim Einfall auf die Grenzfläche zu einem optisch dünneren Medium, z.B. Luft, in die Prismen zurückreflektiert, wenn der Einfallswinkel größer als der Winkel der Totalreflexion ist. Dementsprechend ist der Austrittswinkel, bezogen auf die Grenzflächen der Prismen, begrenzt. Die Seitenwände der Prismen zwischen den Kantenlinien 24 und den Vertiefungen 28 stehen jedoch schräg zu der Lichtaustrittsfläche, so daß die Begrenzung des Austrittswinkel durch den Grenzwinkel der Totalreflexion nicht notwendig eine Abschirmung bedeutet. Ein mögliches Kriterium für eine Abschirmung läßt sich dadurch ableiten, daß gefordert wird, daß für Strahlengänge in den Prismen bis zu einer vorgegebenen Höchstzahl k (z.B. k = 1, 2, 3 oder 4) von inneren Reflexionen in den Prismen vor einem Lichtaustritt aus der Struktur der Austrittswinkel bezüglich einer Senkrechten zu der Grundfläche zu der lichtbrechenden Struktur maximal gleich dem Abschirmwinkel ist. Andere Abschirmmechanismen und Abschirmkriterien können alternativ oder ergänzend auch verwendet werden.

Es hat sich gezeigt, daß für Prismen mit einem Querschnitt in der Form eines gleichschenkligen Dreiecks eine gute Abschirmung erreicht wird, wenn zwischen dem Abschirmwinkel C und dem Prismenwinkel w für eine Grenzfläche zu Luft die folgenden Relationen bestehen:

$$w/2 \leq C$$

$$w \geq 2 \, (2 \, \arcsin(1/n) + 90)/3$$

$$\tan(w/2) \leq (n \sin(\arcsin(1/n) - 3 \, w/2) + \cos(w/2)) \, / \, (n \cos(\arcsin(1/n) - 3 \, w/2) + \sin(w/2)),$$

wobei n der Brechungsindex der Platte 20 bzw. 22 ist. Aufgrund der senkrecht zueinanderstehenden Prismenstrukturen ergibt sich eine Entblendung mindestens in Längs- und Querrichtung, wobei der Abschirmwinkel C für die beiden Richtungen durch eine geeignete Wahl des Prismenwinkels w unterschiedlich für die beiden Prismenstrukturen 24 und 26 gewählt werden kann. Bei üblichen Abschirmwinkeln zwischen ca. 50° bis 80° liegen die Prismenwinkel vorzugsweise in einem Bereich von 90° bis 130°, noch bevorzugterweise im Bereich von 110° bis 128°.

Anstelle von orthogonalen rillenförmigen Prismenstrukturen sind auch andere linienförmige Prismenstrukturen mit orthogonal aufeinanderstehenden Linien denkbar, z.B. kreisförmige Rillen bzw. Prismen in einer Struktur und sternförmig von dem Kreiszentrum ausgehenden Rillen mit dazwischenliegenden Prismen in der anderen Struktur, die auf allen Kreisrillen senkrecht stehen. Die Orientierung der Prismenstrukturen 24 und 26 kann von der in den Figuren 2 bis 4 dargestellten Orientierung abweichen. Die beiden Prismenstrukturen können beispielsweise direkt aneinander angrenzen oder jeweils nach außen weisen. Wenn beide Prismenstrukturen in die gleiche Richtung weisen, kann diese Richtung auch entgegengesetzt zu der vorangehend beschriebenen Richtung, d.h. entgegengesetzt zu der Richtung des Lichtaustritts aus der Abdeckung sein.

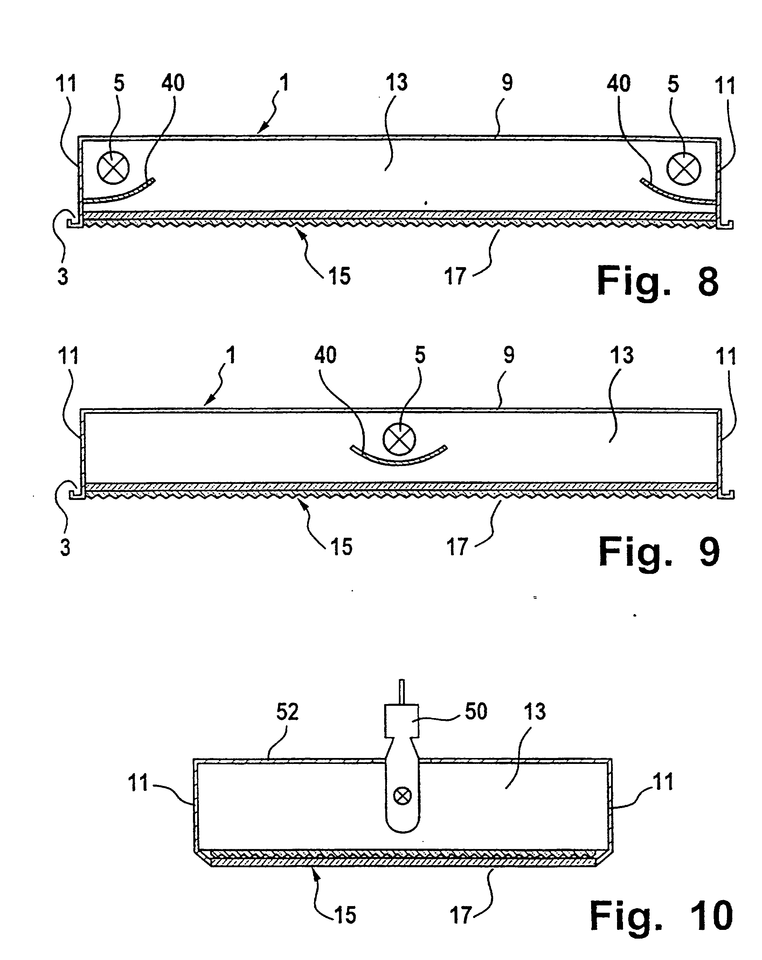

In den Figuren 5 bis 7 sind Ausführungsformen mit mehreren Lampen 5 gezeigt. Während die Ausführungsbeispiele der Figuren 1 und 5 jeweils vorsehen, daß die Lampen 5 mittig bzw. mit einigem Abstand zu den Seitenwänden 11 in dem Hohllichtleiter angeordnet sind, ist es, wie in Fig. 6 und 7 gezeigt, auch denkbar, daß sich mindestens eine oder mehrere Lampen 5 nahe einer Seitenwand 11 des Hohllichtleiters, aber dennoch gegenüber der Abdeckung 15 befinden.

Bei den Ausführungsformen gemäß Fig. 8 und 9 sind zwischen Lampe 5 und Abdeckung 15 ein oder mehrere Sekundärelemente 40 angeordnet, welche die direkte Bestrahlung der Innenfläche der Abdeckung 15 ganz oder teilweise hemmen. Dadurch werden helle Flecken an der Lichtaustrittsfläche 17 vermieden oder gedämpft.

Die Sekundärelemente 40 sind auf der der Dachwand 9 zugewandten Seite diffus oder spiegelnd reflektierend ausgebildet und reflektieren das auf sie einfallende Licht zu der Dachwand 9, von wo es dann seinerseits zu der Abdeckung 15 reflektiert wird. Dadurch wird das von den Lampen 5 abgestrahlte Licht, das auf die Abdeckung 15 einfällt, gleichmäßiger über deren Breite verteilt, so daß die erwähnten hellen Flecken vermieden oder abgeschwächt werden.

Gemäß einer besonderen Ausführungsform sind die Sekundärelemente 40 auf ihrer Unterseite ebenfalls reflektierend ausgebildet, so daß sie Licht, das auf sie einfällt, insbesondere Licht, das von der Abdeckung 15 reflektiert wird, zu der Abdeckung 15 zurückreflektieren. Eine diffus reflektierende Ausbildung ist vorteilhaft, um eine gleichmäßige Lichtstärkeverteilung zu erreichen. Je nach lichttechnischer Aufgabenstellung und der sonstigen Gestaltung der Leuchte können die Sekundärelemente 40 an ihrer Oberseite und/oder Unterseite jedoch auch ganz oder teilweise spiegelnd ausgebildet sein.

Um zu vermeiden, daß im Bereich der Lampen 5 und der Sekundärelemente 40 nun umgekehrt dunkle Flecke auf der Lichtaustrittsfläche 17 entstehen, können die Sekundärelemente 40 teilweise lichtdurchlässig ausgebildet sein, so daß ein Teil des direkt von der Lampe auf sie einfallenden Lichts direkt zu der Abdeckung 15 durchgelassen wird, während ein weiterer Teil zu der Dachwand 9 reflektiert wird.

Zu diesem Zweck können sie ganz oder teilweise aus einem teilweise lichtdurchlässigen, vorzugsweise diffus streuenden Material ausgebildet sein. Alternativ können sie auch mit Löchern versehen sein, welche Licht durchlassen. Beide Möglichkeiten lassen sich auch kombinieren, z.B. derart, daß die Löcher mit einem diffus streuenden Material verkleidet sind.

Während in den Zeichnungen die Sekundärelemente schematisch als flache Elemente dargestellt sind, können diese auch ein Volumen einnehmen und insbesondere dann, wenn sie zu der Abdeckung 15 hin lichtundurchlässig sind, elektrische und/oder mechanische Komponenten, beispielsweise ein Vorschaltgerät, eine Lampenfassung, Leitungen oder dgl. aufnehmen.

Während in den dargestellten Abbildungen die Sekundärelemente 15 als separate Elemente vorgesehen sind, kann gemäß einer weiteren, nicht dargestellten Ausführungsform auch vorgesehen sein, daß statt dieser separaten Elemente 40 die Platte 20 und/oder die Platte 22 auf der Seite des Lichteinfalls mit einer den Lichtdurchtritt begrenzenden oder verhindernden Schicht versehen ist. Beispielsweise kann, Bezug nehmend auf Fig. 9, statt dem Element 40 auf der Platte 20 in dem Bereich unterhalb der Lampe 5 eine Schicht aus einem teilweise transparenten Material vorhanden sein, welches einen Teil des einfallenden Lichts in den Hohlraum 13 zurückreflektiert und einen Teil des Lichts in die Platte 20 eintreten läßt. Auch eine vollständig lichtundurchlässige lokale Beschichtung kann vorgesehen sein. Zur Vermeidung dunkler Flecken kann diese Beschichtung in Form von lichtundurchlässigen oder teilweise lichtdurchlässigen, vorzugsweise verspiegelten Abschnitten, z.B. Streifen, Punkten oder Quadraten, vorgesehen sein, die sich mit nicht beschichteten Abschnitten auf der Platte abwechseln. Entsprechende Muster lassen sich in einfacher Weise mit üblichen Beschichtungsverfahren, z.B. durch Bedrucken, auf die nicht strukturierte Seite einer Prismenplatte, wie der Prismenplatte 20, anbringen. Gemäß einer Ausführungsform besitzen diese Muster keine ausgeprägte Vorzugsrichtung und sind z.B. aus statistisch verteilten Elementen aufgebaut, was der Ausbildung von dunklen Mustern an der Lichtaustrittsfläche entgegenwirkt.

Fig. 10 zeigt eine weitere Ausführungsform einer erfindungsgemäßen Leuchte, welche ohne die vorangehend erwähnten Sekundärelemente auskommt. Gleiche Elemente wie in den vorangehend beschriebenen Ausführungsformen sind mit denselben Bezugszeichen versehen. Bei dieser Ausführungsform ist eine Lampe 50, beispielsweise eine Leuchtstofflampe, von oben durch eine Öffnung in der Dachfläche 52 in den Hohlraum eingeführt. Die Lichtstärkeverteilung dieser Lampe 50 hat an der Stirnseite der Lampe, also auf der der Abdeckung 15 zugewandten Seite, ein Minimum und der Hauptteil des Lichtes wird im wesentlichen parallel oder schräg zu der Abdeckung 15 in den Hohlraum 13 eingestrahlt. Das direkt von der Lampe auf die Abdeckung 15 einfallende Licht stellt daher nur einen relativ kleinen Anteil des gesamten auf diese Abdeckung einfallenden Lichts dar. Dementsprechend entsteht an der Stelle gegenüber dieser Lampe auf der Lichtaustrittsfläche kein heller Fleck oder nur ein Fleck, der sich weniger stark von dem Rest der Lichtaustrittsfläche abhebt.

Erfindungsgemäß muß nicht jeder Lampe eine Lichtstärkebegrenzungseinrichtung zugeordnet sein. Für bestimmte Anwendungen kann es zur Vermeidung von dunklen Flecken auf der Lichtaustrittsfläche zweckmäßig sein, den direkten Lichteinfall von einer Lampe auf die Lichtauskoppeleinrichtung nur für einen Teil der in dem Hohlraum befindlichen Lampen zu verhindern oder zu begrenzen und für einen Teil der Lampen den direkten Lichteinfall auf die Lichtauskoppeleinrichtung zuzulassen, wobei diese sonstigen Lampen dann auch nicht notwendig so angeordnet sein müssen, daß ihre Lichtstärkeverteilungskurve in der Richtung zu der Lichtauskoppelfläche hin ein Minimum besitzt.

Eine weitere Möglichkeit, eine gleichmäßigere Abstrahlung der Lichtauskoppeleinrichtung zu erreichen, ist, im Lichtweg des auf die Lichtauskoppeleinrichtung einfallenden Lichts einen oder mehrere Diffusoren vorzusehen, insbesondere nahe den Lichtquellen, die durch Lichtstreuung das Licht gleichmäßiger verteilen. Der Diffusor kann in baulicher Einheit mit der Lichtauskoppeleinrichtung vorgesehen sein.

Es ist zweckmäßig, die Innenseite des Hohlleiters mit spiegelnd reflektierenden Flächen auszubilden, um die Lichtverluste im Inneren der Leuchte gering zu halten. Es kann jedoch auch vorgesehen sein, daß eine oder mehrere Wände des Gehäuses ganz oder teilweise mit Öffnungen, z.B. als Lochbleche, ausgebildet ist, um auch eine Lichtabstrahlung in andere Raumrichtungen zu erreichen. Dies kann z.B. für die Dachwand 9 oder 52 sinnvoll sein, wenn eine indirekte Raumbeleuchtung durch Anstrahlen der Raumdecke mit der erfindungsgemäßen Leuchte erreicht werden soll. Dies gilt insbesondere für Hängeleuchten.

Die erfindungsgemäße Leuchte kann in mannigfachen Formen und Ausgestaltungen realisiert werden. Insbesondere kann die erfindungsgemäße Leuchte eine Rundleuchte oder ein Downlight sein. Dabei kann die Lichtquelle insbesondere eine ringförmige Lichtquelle sein, die sich beispielsweise am äußeren Rand des Hohllichtleiters erstreckt, ähnlich wie in Fig. 8 gezeigt, die für diese Ausführungsform einen Schnitt durch die Symmetrieachse darstellen würde. Es kann auch vorgesehen sein, daß bei einer solchen Leuchte eine näherungsweise punktförmige Lichtquelle im Zentrum der Leuchte verwendet wird. Dies würde in etwa in der Ausführungsform Fig. 9 entsprechen, wobei die Abbildung der Fig. 9 dann ebenfalls einen Schnitt durch die Symmetrieachse der Leuchte darstellen würde.

Generell ist natürlich die Lichtquelle bzw. die Lichtquellen bei der erfindungsgemäßen Leuchte nicht auf einen bestimmten Typ oder auf eine bestimmte Form beschränkt. Die Wahl einer geeigneten Lichtquelle, die außer aus einer Lampe auch z.B. aus Leuchtdioden bestehen kann, richtet sich nach der jeweiligen gestellten lichttechnischen Aufgabe, der Geometrie des Hohllichtleiters, der geforderten Lichtstärkeverteilungskurve des direkt abgestrahlten Lichts und dgl.

Verschiedene Abwandlungen der vorangehend beschriebenen Ausführungsbeispiele sind im Rahmen der Erfindung möglich. Beispielsweise kann statt zwei Prismenplatten auch eine andere Anzahl Prismenplatten vorgesehen sein. Ebenso können auch Lampen außerhalb des Hohlraums in diesen Licht einkoppeln.

Die in der vorangehenden Beschreibung, den Ansprüchen und den Zeichnungen offenbarten Merkmale der Erfindung können sowohl einzeln als auch in beliebiger Kombination für die Verwirklichung der Erfindung in ihren verschiedenen Ausführungsformen wesentlich sein.

Bezugszeichenliste

| 1 | Gehäuse |
|---|---|
| 3 | Rand |
| 5 | Lampe |
| 9 | Dachwand |
| 11 | Seitenwand |
| 13 | Hohlraum |
| 15 | Abdeckung |
| 17 | Lichtaustrittsfläche |
| 20 | Prismenplatte |
| 22 | Prismenplatte |
| 24, 24a, 24b | Prismen |
| 26, 26a, 26b | Prismen |
| 28, 28a, 28b | Vertiefung |
| 30, 30a, 30b | Vertiefung |
| 40 | Sekundärelement |
| 50 | Lampe |
| 52 | Dachfläche |

**Patentansprüche**

1. Leuchte zur blendungsfreien Beleuchtung von Innenräumen, insbesondere von Arbeitsplätzen in Innenräumen, mit einer oder mehreren Lampen (5) und einem Hohllichtleiter, der einen Hohlraum (13) mit einer oder mehreren zumindest teilweise reflektierenden Wänden aufweist und aus dem Licht an mindestens einer Lichtauskoppelfläche über eine Lichtauskoppeleinrichtung (20, 22) zum Austritt an einer Lichtaustrittsfläche (17) der Leuchte ausgekoppelt wird, wobei die Lichtauskoppeleinrichtung ein oder mehrere lichtdurchlässige Elemente (20, 22) mit einer lichtbrechenden Struktur (24, 26) aufweist, welche in zumindest einer Ebene senkrecht zu der Lichtaustrittsfläche (17) eine Lichtabstrahlung oberhalb eines Grenzwinkels im wesentlichen verhindert, derart, daß **dadurch** eine Abschirmung des an der Lichtaustrittsfläche (17) austretenden Lichts in dieser Ebene herbeigeführt wird, und wobei in dem Hohlraum (13) mindestens eine Lampe (5) angeordnet ist, **dadurch gekennzeichnet, daß** die Lampe (5) Licht in den Hohlraum (13) des Hohllichtleiters direkt abgibt, und daß die Lampe (5) in dem Hohlraum (13) so angeordnet ist, daß die Lichtstärkeverteilung des von ihr unmittelbar abgestrahlten Lichts in einer Richtung zu der Lichtauskoppeleinrichtung (20, 22) zumindest ein relatives Minimum aufweist, und/oder eine Lichtstärkebegrenzungseinrichtung (40) vorhanden ist, welche zumindest teilweise verhindert, daß von der Lampe (5) in einer Richtung zu der Lichtauskoppeleinrichtung (20, 22) abgestrahltes Licht direkt auf ein lichtdurchlässiges Element (20, 22) der Lichtauskoppeleinrichtung einfällt und dann in dieses Element (20) oder ein im Strahlengang folgendes Element (22) eintritt.

2. Leuchte nach Anspruch 1, **dadurch gekennzeichnet, daß** eine Lichtstärkebegrenzungseinrichtung zwischen der Lampe (5) und der Lichtauskoppeleinrichtung (20, 22) angeordnet ist und einen direkten Lichteinfall von der Lampe (5) auf die Lichtauskoppeleinrichtung (20, 22) behindert oder verhindert.

3. Leuchte nach Anspruch 1 oder 2, **dadurch gekennzeichnet, daß** die Oberfläche eines transparenten Elements (20, 22) der Lichtauskoppeleinrichtung zumindest in einem Abschnitt an der Lichteinfallsseite so ausgebildet ist, daß nur ein Teil des darauf einfallenden Lichts in das Element eintritt, der kleiner ist als der entsprechende Anteil in einem angrenzenden Abschnitt.

**4.** Leuchte nach Anspruch 3, **dadurch gekennzeichnet, daß** zumindest ein Teil des Abschnitts mit einer ganz oder teilweise absorbierenden und/oder reflektierenden Beschichtung versehen ist.

**5.** Leuchte nach einem der Ansprüche 1 bis 4, **dadurch gekennzeichnet, daß** die Lichtstärkebegrenzungseinrichtung (40) von der Lampe (5) in Richtung zu der Lichtauskoppelfläche abgestrahltes Licht zumindest teilweise in eine Richtung weg von der Lichtaustrittsfläche (17) reflektiert.

**6.** Leuchte nach einem der Ansprüche 1 bis 5, **dadurch gekennzeichnet, daß** die Lichtstärkebegrenzungseinrichtung (40) teilweise direkt von der Lampe (5) auf sie einfallendes Licht durchläßt.

**7.** Leuchte nach Anspruch 5, **dadurch gekennzeichnet, daß** die Lichtstärkebegrenzungseinrichtung eine Lochstruktur (40) mit Löchern zum Durchlassen von Licht der Lampe (5) aufweist.

**8.** Leuchte nach einem der Ansprüche 1 bis 7, **dadurch gekennzeichnet, daß** die Lichtstärkebegrenzungsreinrichtung ein oder mehrere Elemente (40) enthält, die auf der der Lampe (5) zugewandten Seite und/oder auf der von der Lampe (5) abgewandten Seite diffus reflektierend ausgebildet sind.

**9.** Leuchte nach einem der Ansprüche 1 bis 8, **dadurch gekennzeichnet, daß** die Lichtstärkebegrenzungseinrichtung ein oder mehrere Elemente (40) aufweist, die auf der der Lichtauskoppeleinrichtung (20, 22) zugewandten Seite zumindest teilweise reflektierend ausgebildet sind.

**10.** Leuchte nach einem der Ansprüche 1 bis 8, **dadurch gekennzeichnet, daß** die Lichtstärkebegrenzungseinrichtung zumindest ein Element (40) aufweist, bei dem der Grad der Lichtdurchlässigkeit sich über einer Fläche verändert, auf die Licht von der Lampe (5) direkt oder indirekt einfällt.

**11.** Leuchte nach einem der Ansprüche 1 bis 10, **dadurch gekennzeichnet, daß** die Lichtauskoppeleinrichtung in dem Lichtweg des aus der Lichtaustrittsfläche (17) austretenden Lichts eine erste und eine zweite Grenzfläche zwischen jeweils zwei Medien mit unterschiedlichen Brechungsindizes aufweist, die mit einer lichtbrechenden ersten (24) bzw. zweiten (26) Struktur versehen sind, die zumindest abschnittsweise entsprechend einem Linenmuster aus einer oder mehreren Linien (28, 30) ausgebildet ist, dessen Linie oder Linien einen oder mehrere längliche lichtbrechende Abschnitte auf einander gegenüberliegenden Seiten begrenzen, wobei die lichtbrechende Struktur (24, 26), bezogen auf eine Fläche senkrecht zu der oder den Linien (28, 30), eine Abschirmung des aus der Grenzfläche austretenden Lichts oberhalb eines Grenzwinkels bezüglich einer Normalen zu der Grenzfläche erzeugt,
wobei die Linien der zweiten Struktur (30) relativ zu den Linien der ersten Struktur (28) so angeordnet sind, daß das aus der Lichtaustrittsfläche (17) der Leuchte austretende Licht zumindest in zwei nicht parallelen Ebenen senkrecht zu der Lichtaustrittsfläche (17) jeweils oberhalb eines Grenzwinkels bezüglich einer Normalen zu der Lichtaustrittsfläche (17) abgeschirmt wird.

**12.** Leuchte nach Anspruch 11, **dadurch gekennzeichnet, daß** die lichtbrechenden Abschnitte Prismen (24, 26) sind.

**13.** Leuchte nach einem der Ansprüche 11 oder 12, **dadurch gekennzeichnet, daß** die erste und/oder zweite Struktur entsprechend einem Muster von geraden parallelen kreuzungsfreien Linien (28, 30) aufgebaut ist, zwischen denen sich Prismen (24, 26) als lichtbrechende Abschnitte befinden, deren Querschnittsprofil im wesentlichen translationsinvariant bezüglich der Richtung der Linien ist.

**14.** Leuchte nach einem der Ansprüche 11 bis 13, **dadurch gekennzeichnet, daß** die Lichtauskoppeleinrichtung zwei oder mehr geschichtete plattenförmige Elemente (20, 22) aufweist, deren Grundflächen parallel zueinander angeordnet sind, wobei die erste Struktur in einer Grundfläche eines ersten plattenförmigen Elementes und die zweite Struktur in einer Grundfläche eines zweiten plattenförmigen Elementes ausgebildet ist.

**15.** Leuchte nach einem der Ansprüche 12 bis 14, **dadurch gekennzeichnet, daß** die Prismen (24, 26) asymmetrisch ausgebildet sind.

**16.** Leuchte nach einem der Ansprüche 12 bis 15, **dadurch gekennzeichnet, daß** der Prismenwinkel im Bereich zwischen 90° und 130° liegt.

**17.** Leuchte nach einem der vorangehenden Ansprüche, **dadurch gekennzeichnet, daß** mindestens eine Seitenwand (11) und/oder eine Dachwand (9) des Hohlraumes (13) des Hohllichtleiters ganz oder teilweise diffus reflektierend, spiegelnd reflektierend oder matt ausgeführt ist.

**18.** Leuchte nach einem der Ansprüche 1 bis 17, **dadurch gekennzeichnet, daß** die Lichtauskoppeleinrichtung ein Diffusorelement aufweist.

**19.** Leuchte nach einem der Ansprüche 2 bis 18, **dadurch gekennzeichnet, daß** die Lichtstärkebegrenzungseinrichtung ein Element aufweist, welches einen direkten Lichteinfall von der Lampe (5) auf die Lichtauskoppeleinrichtung (20, 22) behindert oder verhindert und gleichzeitig eine elektrische oder mechanische Komponente der Leuchte bildet und/oder ein Volumen aufweist, in dem eine oder mehrere elektrische und/oder mechanische Komponenten der Leuchte angeordnet sind.

**Claims**

**1.** Luminaire for the anti-glare illumination of interior spaces, in particular of workplaces in interior spaces, having one or a plurality of lamps (5) and a hollow light guide which comprises a cavity (13) having one or a plurality of at least partially reflecting walls and from which light is decoupled at least at one light decoupling surface via a light decoupling device (20,22)in order to exit at a light exit surface (17) of the luminaire,
wherein the light decoupling device comprises one or a plurality of light-permeable elements (20,22) having a refractive structure (24, 26) which in at least one plane perpendicular to the light exit surface (17) substantially prevents light radiating above a limiting angle in such a manner that as a consequence the light exiting at the light exit surface (17) is screened in this plane and wherein at least one lamp (5) is disposed in the cavity (13), **characterised in that** the lamp (5)directly emits light into the cavity (13) of the hollow light guide and that the lamp (5) is disposed in the cavity (13) in such a manner that the light intensity distribution of the light directly radiated by the lamp at least comprises a relative minimum in a direction towards the light decoupling device (20,22) and/or a light intensity limiting device (40) is provided which at least partially prevents light radiated from the lamp (5) in a direction towards the light decoupling device (20, 22) from being incident directly on a light-permeable element (20,22) of the light-decoupling device and then from entering in this element (20) or an element (22) following-on in the beam path.

**2.** Luminaire according to claim 1 **characterised in that** a light intensity limiting device is disposed between the lamp (5) and the light decoupling device (20,22) and impedes or prevents light from the lamp (5) being directly incident on the light decoupling device (20,22).

**3.** Luminaire according to claim 1 or 2 **characterised in that** the surface of a transparent element (20,22) of the light decoupling device is designed at least in one section on the light incident side in such a manner that only some of the incident light enters the element which is smaller than the corresponding portion in an adjacent section.

**4.** Luminaire as claimed 3, **characterised in that** at least one part of the section is provided with a wholly or partially absorbing and/or reflecting coating.

**5.** Luminaire according to any one of claims 1 to 4, **characterised in that** the light intensity limiting device (40) reflects light, which is radiated from the lamp (5) in the direction towards the light decoupling surface, at least partially in a direction away from the light exit surface (17).

**6.** Luminaire according to any one of claims 1 to 5,
**characterised in that** the light intensity limiting device (40) allows partially the through-passage of light which is incident directly from the lamp (5) onto said limiting device.

**7.** Luminaire according to claim 5, **characterised in that** the light intensity limiting device comprises a perforated structure (40)having holes for the passage of light from the lamp (5).

**8.** Luminaire according to any one of claims 1 to 7, **characterised in that** the light intensity limiting device comprises one or a plurality of elements (40) which are designed to be diffusely reflective on the side facing the lamp (5) and/or on the side remote from the lamp (5).

**9.** Luminaire according to any one of claims 1 to 8, **characterised in that** the light intensity limiting device comprises one or a plurality of elements (40) which are designed to be at least partially reflective on the side facing the light decoupling device (20,22).

10. Luminaire according to any one of claims 1 to 8, **characterised in that** the light intensity limiting device comprises at least one element (40) where the level of light permeability changes over a surface onto which surface light from the lamp (5) is directly or indirectly incident.

11. Luminaire according to any one of claims 1 to 10, **characterised in that** the light decoupling device comprises, in the light path of the light exiting from the light exit surface (17), a first and a second boundary surface between in each case two media having different refractive indices which are provided with a refractive first (24) or respectively second (26) structure which is designed at least in sections according to a linear pattern consisting of one or a plurality of lines (28, 30), the line or lines of which define one or a plurality of elongated refractive sections on mutually opposite sides, wherein the refractive structure (24, 26), with respect to a surface perpendicular to the line(s) (28,30) creates a screening of the light exiting at the boundary surface above a limiting angle with respect to a line normal to the boundary surface,
wherein the lines of the second structure (30) are disposed relative to the lines of the first structure (28) in such a manner that light exiting from the light exit surface (17) of the luminaire is screened at least in two non-parallel planes perpendicular to the light exit surface (17) in each case above a critical angle with respect to a line normal to the light exit surface (17).

12. Luminaire according to claim 11, **characterised in that** the refractive sections are prisms (24, 26).

13. Luminaire according to any one of claims 11 or 12, **characterised in that** the first and/or second structure is constructed according to a pattern of straight parallel, intersection-free lines (28, 30), between which prisms (24, 26) are located as refractive sections whose cross-sectional profile is substantially translationally invariant with respect to the direction of the lines.

14. Luminaire according to any one of claims 11 to 13, **characterised in that** the light decoupling device comprises two or more layered, plate-shaped elements (20,22) whose base surfaces are disposed in parallel with each other, wherein the first structure is formed in a base surface of a first plate-shaped element and the second structure is formed in a base surface of a second plate-shaped element.

15. Luminaire according to any one of claims 12 to 14, **characterised in that** the prisms (24, 26) are designed in an asymmetrical manner.

16. Luminaire according to any one of claims 12 to 15, **characterised in that** the prism angle lies in the range between 90° and 130°.

17. Luminaire according to any of the preceding claims, **characterised in that** at least one side wall (11) and/or a top wall (9) of the cavity (13) of the hollow light guide is wholly or partially diffusely reflective, mirror-like reflective or of a matt design.

18. Luminaire according to any one of claims 1 to 17, **characterised in that** the light decoupling device comprises a diffuser element.

19. Luminaire according to any one of claims 2 to 18, **characterised in that** the light intensity limiting device comprises an element which impedes or prevents light from the lamp (5) being directly incident on the light decoupling device (20,22) and simultaneously forms an electrical or mechanical component of the luminaire and/or comprises a volume in which are disposed one or a plurality of electrical and/or mechanical components of the luminaire.

**Revendications**

1. Luminaire pour l'éclairage non éblouissant de locaux, en particulier d'emplacements de travail dans des locaux, comportant une ou plusieurs lampes (5) et un conduit de lumière creux qui présente une cavité (13) ayant une ou plusieurs parois au moins partiellement réfléchissantes, et d'où la lumière est découplée à au moins une surface de découplage de lumière par l'intermédiaire d'un dispositif de découplage de lumière (20, 22) pour sortir à une surface de sortie de lumière (17) du luminaire, le dispositif de découplage de lumière présentant un ou plusieurs éléments transparents (20, 22) ayant une structure réfringente (24, 26) qui, dans au moins un plan perpendiculaire à la surface de sortie de lumière (17), empêche pratiquement une émission de lumière au-dessus d'un angle limite, de façon telle que cela produise un masquage dans ce plan de la lumière qui sort à la surface de sortie de lumière (17), et dans la cavité (13) étant placée au moins une lampe (5), **caractérisé par le fait que** la lampe (5) envoie directement de la lumière dans la cavité (13) du conduit de lumière creux, et que la lampe (5) est placée dans la cavité (13) de façon que la distribution de l'intensité de la lumière qu'elle émet directement présente au moins un minimum relatif dans une direction vers le dispositif de découplage de lumière (20, 22), et/ou il existe un dispositif de limitation de l'intensité lumineuse (40) qui empêche au moins en partie que la lumière émise par la lampe (5) dans une direction vers le dispositif de découplage de lumière (20, 22) tombe directement sur un élément transparent (20, 22) du dispositif de découplage de lumière et ensuite entre dans cet élément (20) ou dans un élément (22) qui suit sur le trajet des rayons.

2. Luminaire selon la revendication 1, **caractérisé par le fait qu'**un dispositif de limitation de l'intensité lumineuse est placé entre la lampe (5) et le dispositif de découplage de lumière (20, 22) et entrave ou empêche une incidence directe de lumière de la lampe (5) sur le dispositif de découplage de lumière (20, 22).

3. Luminaire selon l'une des revendications 1 et 2, **caractérisé par le fait que** la surface d'un élément transparent (20, 22) du dispositif de découplage de lumière est faite, au moins dans une zone sur le côté d'incidence de la lumière, de façon que seulement une partie de la lumière qui tombe sur elle entre dans l'élément, laquelle partie est plus petite que la partie correspondante dans une zone voisine.

4. Luminaire selon la revendication 3, **caractérisé par le fait qu'**au moins une partie de la zone est pourvue d'un revêtement entièrement ou partiellement absorbant et/ou réfléchissant.

5. Luminaire selon l'une des revendications 1 à 4, **caractérisé par le fait que** le dispositif de limitation de l'intensité lumineuse (40) réfléchit la lumière émise par la lampe (5) en direction de la surface de découplage de lumière au moins en partie dans une direction écartée de la surface de sortie de lumière (17).

6. Luminaire selon l'une des revendications 1 à 5, **caractérisé par le fait que** le dispositif de limitation de l'intensité lumineuse (40) laisse passer partiellement la lumière qui tombe directement de la lampe (5) sur lui.

7. Luminaire selon la revendication 5, **caractérisé par le fait que** le dispositif de limitation de l'intensité lumineuse présente une structure perforée (40) pourvue de trous pour le passage de la lumière de la lampe (5).

8. Luminaire selon l'une des revendications 1 à 7, **caractérisé par le fait que** le dispositif de limitation de l'intensité lumineuse contient un ou plusieurs éléments (40) qui produisent une réflexion diffuse sur le côté dirigé vers la lampe (5) et/ou sur le côté opposé à la lampe (5).

9. Luminaire selon l'une des revendications 1 à 8, **caractérisé par le fait que** le dispositif de limitation de l'intensité lumineuse présente un ou plusieurs éléments (40) qui sont au moins partiellement réfléchissants sur le côté dirigé vers le dispositif de découplage de lumière (20, 22).

10. Luminaire selon l'une des revendications 1 à 8, **caractérisé par le fait que** le dispositif de limitation de l'intensité lumineuse présente au moins un élément (40) dont le degré de transparence varie sur une surface sur laquelle tombe directement ou indirectement la lumière émise par la lampe (5).

11. Luminaire selon l'une des revendications 1 à 10, **caractérisé par le fait que** le dispositif de découplage de lumière présente sur le trajet de la lumière qui sort de la surface de sortie de lumière (17) une première et une deuxième interfaces chacune entre deux milieux d'indice de réfraction différent qui sont pourvus respectivement d'une première structure réfringente (24) et d'une deuxième structure réfringente (26) constituées chacune au moins en partie d'un système d'une ou de plusieurs lignes (28, 30) qui limitent sur des côtés opposés une ou plusieurs zones réfringentes allongées, la structure réfringente (24, 26) produisant, par rapport à une surface perpendiculaire à la ligne ou aux lignes (28, 30), un masquage de la lumière qui sort de l'interface au-dessus d'une angle limite par rapport à une normale à l'interface,

les lignes de la deuxième structure (30) étant placées par rapport à celles de la première structure (28) de façon que la lumière qui sort de la surface de sortie de lumière (17) du luminaire soit masquée au moins dans deux plans non parallèles perpendiculaires à la surface de sortie de lumière (17) respectivement au-dessus d'un angle limite par rapport à une normale à la surface de sortie de lumière (17).

**12.** Luminaire selon la revendication 11, **caractérisé par le fait que** les zones réfringentes sont des prismes (24, 26).

**13.** Luminaire selon l'une des revendications 11 et 12, **caractérisé par le fait que** la première et/ou la deuxième structures sont constituées d'un système de lignes droites parallèles ne se croisant pas (28, 30) entre lesquelles se trouvent comme zones réfringentes des prismes (24, 26) dont le profil de la section est sensiblement invariant en translation par rapport à la direction des lignes.

**14.** Luminaire selon l'une des revendications 11 à 13, **caractérisé par le fait que** le dispositif de découplage de lumière présente deux ou plus de deux éléments en forme de plaque superposés (20, 22) dont les surfaces de base sont parallèles, la première structure était formée dans une surface de base d'un premier élément en forme de plaque et la deuxième structure formée dans une surface de base d'un deuxième élément en forme de plaque.

**15.** Luminaire selon l'une des revendications 12 à 14, **caractérisé par le fait que** les prismes (24, 26) sont de forme asymétrique.

**16.** Luminaire selon l'une des revendications 12 à 15, **caractérisé par le fait que** l'angle des prismes est compris entre 90° et 130°.

**17.** Luminaire selon l'une des revendications précédentes, **caractérisé par le fait qu'**au moins une paroi latérale (11) et/ou une paroi de couverture (9) de la cavité (13) du conducteur de lumière creux est réalisée entièrement ou partiellement de façon à produire une réflexion diffuse ou à produire une réflexion spéculaire ou à être mate.

**18.** Luminaire selon l'une des revendications 1 à 17, **caractérisé par le fait que** le dispositif de découplage de lumière présente un élément diffuseur.

**19.** Luminaire selon l'une des revendications 2 à 18, **caractérisé par le fait que** le dispositif de limitation de l'intensité lumineuse présente un élément qui entrave ou empêche une incidence directe de la lumière émise par la lampe (5) sur le dispositif de découplage de lumière (20, 22) et en même temps forme un composant électrique ou mécanique du luminaire et/ou présente un volume dans lequel sont placés un ou plusieurs composants électriques et/ou mécaniques du luminaire.

Fig. 1

Fig. 5

Fig. 6

Fig. 7

**Fig. 2**

**Fig. 3**

**Fig. 4**

**Fig. 8**

**Fig. 9**

**Fig. 10**